# FASCICULE DE BREVET EUROPEEN

(11) **EP 1 772 808 B1**
(45) Date de publication et mention de la délivrance du brevet: **08.07.2009**
(21) Numéro de dépôt: 05292057.6
(22) Date de dépôt: 04.10.2005
(51) Int. Cl.: G06F 13/36, H04N 3/15

(54) **Dispositif et procédé de lecture d'informations dans un ensemble de composants électroniques reliés à un bus de communication, appliqué à la lecture d'une matrice de pixels**
Vorrichtung und Verfahren zum Lesen von Daten in einer Ansammlung von elektronischen Bauteilen, die mit einem Kommunikationsbus verbunden sind, angewendet auf das Lesen einer Matrix von Pixeln
Device and process of reading of information in a set of electronic components connected to a communication bus, applied to the reading of a matrix of pixels

(43) Date de publication de la demande: 11.04.2007
(73) Titulaire: CSEM Centre Suisse d'Electronique et de Microtechnique SA - Recherche et Développement, 2007 Neuchâtel (CH)
(72) Inventeur: Ruedi, Pierre-François, 2068 Hauterive (CH); Gyger, Stève, 2000 Neuchâtel (CH)
(74) Mandataire: Bonnet, Michel

(56) Documents cités:
- US-A- 5 404 556
- US-B1- 6 253 161

## Description

La présente invention concerne un dispositif de lecture d'informations dans un ensemble de composants électroniques reliés à un bus de communication, pour la transmission de ces informations via le bus de communication. Elle concerne également un procédé correspondant et une application de ce procédé à la lecture d'informations contenues dans une matrice de pixels.

Plus précisément, l'invention concerne un dispositif de lecture d'informations dans un ensemble de composants électroniques reliés à un bus de communication, pour la transmission de ces informations via le bus de communication, comportant :
- des moyens de lecture de valeurs contenues dans au moins une partie des composants électroniques de cet ensemble ayant une valeur à transmettre, et
- un circuit d'arbitrage pour la transmission successive des valeurs lues via le bus de communication.

Dans le brevet européen publié sous le numéro EP 1 150 250, il est décrit un dispositif de lecture d'informations dans un ensemble de composants électroniques reliés à un bus de communication asynchrone, et d'encodage de ces informations pour leur transmission via le bus de communication.

Plus spécifiquement, le dispositif décrit dans ce brevet permet de lire des valeurs contenues dans une matrice de pixels et d'encoder temporellement ces valeurs. Un signal, distribué à l'ensemble des pixels, transmet une valeur de référence évoluant au cours du temps. Cette valeur de référence est comparée pour chaque pixel à une valeur locale contenue dans celui-ci. Lorsque la valeur de référence et la valeur locale sont égales, le pixel émet une impulsion sur le bus de communication asynchrone. L'impulsion encode la position du pixel dans la matrice et l'instant d'émission de l'impulsion encode la valeur locale contenue dans le pixel.

L'inconvénient majeur du mode de transmission décrit dans ce brevet réside dans le fait que la transmission de valeurs contenues dans des pixels ayant une valeur à transmettre est réalisée de façon non arbitrée, provoquant des collisions sur le bus de transmission asynchrone. Ceci conduit à une perte d'informations. Une première solution pour remédier à ce problème consiste à maintenir l'activité sur le bus de communication asynchrone à une valeur relativement faible, en pratique inférieure à 10 %, afin de limiter le risque et donc le taux de collisions.

Dans le domaine plus général de la transmission d'informations extraites à partir de composants électroniques reliés à un bus de communication, une autre solution est fournie par le brevet américain publié sous le numéro US 5,404,556. Dans ce brevet, un arbitrage est prévu pour la transmission successive des valeurs lues, via le bus de communication asynchrone. Plus précisément, l'arbitrage est réalisé à l'aide d'un arbre de décision binaire qui sélectionne à un instant donné un unique composant électronique parmi l'ensemble des composants électroniques ayant une valeur à transmettre, pour autoriser ce composant à transmettre sa valeur au bus de communication asynchrone à cet instant.

Ce brevet résout donc le problème des collisions. Cependant, l'ordre dans lequel les composants électroniques sont autorisés à transmettre leur valeur n'est pas déterminé; il dépend de la structure de l'arbre de décision binaire et des délais de propagation internes à cet arbre binaire. Le procédé décrit ne permet donc pas de parcourir de façon séquentielle l'ensemble des composants ayant à un instant donné une valeur à transmettre. Il en résulte qu'un composant qui demanderait en permanence l'accès au bus de communication, par exemple suite à une défectuosité, pourrait compromettre le bon fonctionnement de ce principe de communication. Par contre, une sélection séquentielle de chaque composant désirant accéder, à un instant donné, au bus de communication permet d'assurer un partage équitable de ce même bus de communication.

Le brevet US 6 253 161 décrit un détecteur de mouvement dont les caractéristiques génériques correspondent à celles définies dans les préambules des revendications 1 et 4.

Plus précisément, dans le cas de ce brevet antérieur, les composants électroniques sont les pixels photosensibles d'une matrice (Figure 2 du document) de pixels servant à assurer la détection du mouvement d'un objet passant devant elle. Cette matrice de pixels produit des signaux de sortie X et Y par l'intermédiaire d'encodeurs et de circuits d'arbitrage respectifs. Les circuits d'arbitrage sont réalisés sous une forme d'arborescence, dont les premiers blocs de traitement arbitrent entre deux lignes (ou colonnes) de la matrice. Puis, dans un étage suivant du circuit d'arbitrage un autre bloc arbitre entre deux premiers blocs ainsi de suite. Cet agencement présente l'inconvénient de n'être adapté que pour un nombre de composants électroniques limité, c'est-à-dire dans le cas d'une matrice avec des nombres de pixels faibles par ligne et colonne En revanche, pour servir une quantité de composants importante, voire très importante, la complexité de la structure arborescente deviendrait rapidement prohibitive, entraînant un coût de construction également très élevé.

L'invention vise à résoudre ce problème en fournissant un dispositif, et un procédé correspondant, permettant de simplifier la structure du circuit d'arbitrage en la limitant à un seul étage de blocs de traitement réduisant ainsi la taille du circuit.

L'invention a donc pour objets un dispositif et un procédé de lecture d'informations présentant les particularités de la partie caractéristique respectivement des revendications 1 et 4.

Ainsi, chaque composant électronique ou chaque groupe de composants électroniques se voit affecter un seul bloc de traitement, tandis qu'un signal unique d'autorisation de transmission de valeur lue en parcourant les uns après les autres les blocs de traitement empêche toute collision d'information dans le bus de communication. Le circuit est donc d'une construction simple et d'un coôt comparativement peu élevé, même si un grand nombre d'éléments doivent solliciter l'accès au bus de communication. Enfin, la circulation de l'unique signal d'autorisation de transmission permet de garantir aisément que tous les composants ayant une information à transmettre sont systématiquement sollicités lors du parcours du signal.

D'autres caractéristiques avantageuses de l'invention sont définies quant au dispositif dans les sous revendication 2 et 3 et quant au procédé dans la sous revendication 5.

La revendication 6 définit une application avantageuse de l'invention.

Plus précisément, lorsque les composants électroniques constituent une matrice, le circuit d'arbitrage peut comporter un registre à décalage vertical comportant un bloc pour chaque ligne de la matrice et un registre à décalage horizontal comportant un bloc pour chaque colonne de la matrice.

Dans ce type de structure, en décomposant le registre à décalage en deux registres, l'un vertical, l'autre horizontal, il n'est pas nécessaire de prévoir une bascule D par cellule.

Dans cette application, il est particulièrement intéressant de relier les pixels de la matrice à un bus de communication, notamment pour mettre en oeuvre la lecture d'informations contenues dans cet ensemble de pixels à l'aide d'un procédé d'encodage temporel, tout en annulant le risque d'engendrer des collisions lors de la transmission des informations dans le bus de communication.

L'invention sera mieux comprise à l'aide de la description qui va suivre, donnée uniquement à titre d'exemple et faite en se référant aux dessins annexés, dans lesquels :
- la figure 1 représente schématiquement la structure générale d'un dispositif de lecture d'informations selon l'invention ;
- les figures 2 et 3 illustrent schématiquement un circuit d'arbitrage envisageable pour le dispositif de la figure 1 ;
- la figure 4 est un diagramme temporel illustrant, dans un cas concret, le fonctionnement d'un procédé de lecture d'informations selon l'invention ; et
- la figure 5 détaille la structure d'un composant électronique du dispositif de lecture d'informations de la figure 1.

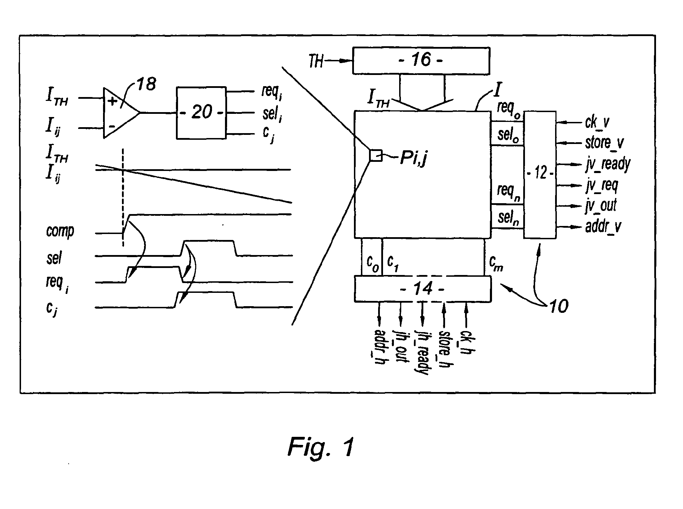

Comme cela est visible sur la figure 1, un mode de réalisation possible d'un dispositif de lecture d'informations selon l'invention comporte une matrice I de pixels P_{i,j}, dans laquelle chaque pixel comporte une valeur I_{i,j} définissant par exemple une intensité de ce pixel. La matrice I comporte n lignes et m colonnes.

Chaque pixel p_{i,j} est relié à un bus de communication commun (non représenté), pour la transmission éventuelle de la valeur qu'il comporte. Par exemple, chaque pixel est un capteur et comporte ses propres moyens de lecture de la valeur I_{i,j}.

Le dispositif de lecture comporte un circuit d'arbitrage 10 pour la transmission successive sans collisions de valeurs lues, via le bus de communication.

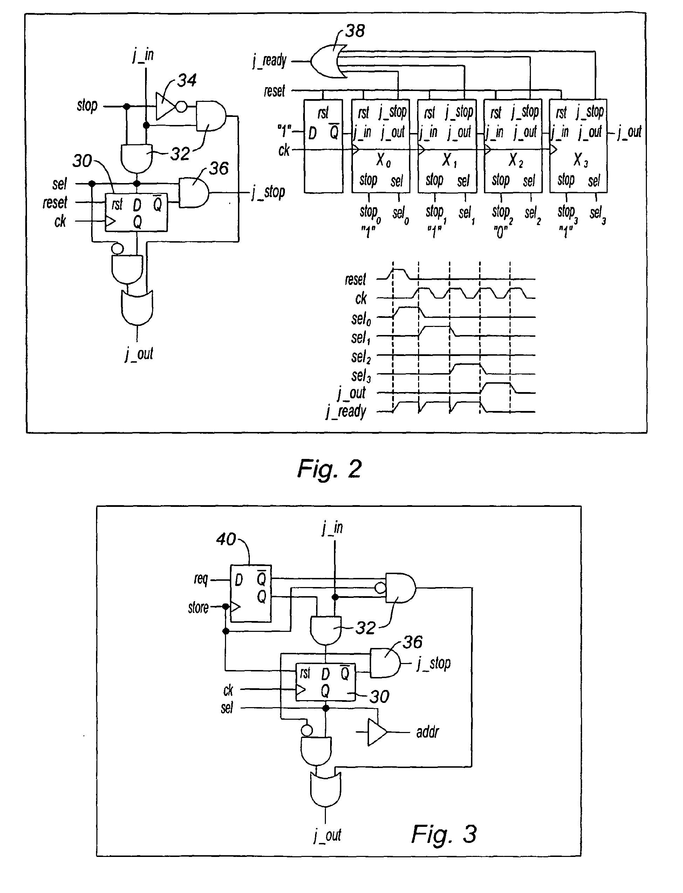

Dans l'exemple de la figure 1, dans lequel les pixels constituent une matrice, le circuit d'arbitrage 10 comporte un premier circuit d'arbitrage vertical 12 comportant un registre à décalage vertical comprenant une bascule D pour chaque ligne de la matrice et un second circuit d'arbitrage horizontal 14 comportant un registre à décalage horizontal comprenant une bascule D pour chaque colonne de la matrice. La structure et le fonctionnement de ces registres à décalage seront détaillés en référence aux figures 2 et 3.

Tous les pixels p_{i,1}, ... , p_{i,m}, d'une même ligne i de la matrice I sont connectés au premier circuit d'arbitrage vertical 12, pour la transmission d'un signal reqᵢ vers le premier circuit d'arbitrage vertical 12 et la réception d'un signal selᵢ depuis ce premier circuit d'arbitrage vertical 12.

Le signal reqᵢ prend une valeur non nulle (par exemple normalisée à « 1 ») lorsqu'au moins l'un des pixels de la ligne i a une valeur à transmettre via le bus de communication, et une valeur nulle lorsque aucun des pixels de la ligne i n'a de valeur à transmettre. Le signal selᵢ prend une valeur non nulle (par exemple normalisée à « 1 ») lorsque le ou les pixel(s) de la ligne i ayant une valeur à transmettre est (sont) autorisé(s) à transmettre sa (leur) valeur au bus de communication, et une valeur nulle sinon. Le signal selᵢ ne peut passer à la valeur 1 que lorsque reqᵢ est à 1, et lorsque selᵢ passe de 1 à 0 (valeur(s) de la ligne i transmise(s) au bus de communication), reqᵢ passe également à 0.

Tous les pixels p_{1,j}, ..., p_{n,j} d'une même colonne j de la matrice I sont connectés au second circuit d'arbitrage horizontal 14, pour la transmission d'un signal cⱼ vers le second circuit d'arbitrage horizontal 14.

Le signal cⱼ prend une valeur non nulle (par exemple normalisée à « 1 ») lorsque le pixel p_{i,j} a une valeur à transmettre via le bus de communication et que selᵢ passe à 1, et une valeur nulle lorsque le signal selᵢ passe à 0.

Pour la réalisation d'un encodage temporel des valeurs contenues dans les pixels de la matrice I, tel que celui décrit dans la demande de brevet européen EP 1 150 250, le dispositif de lecture d'informations comporte en outre un système 16 de distribution d'une valeur de référence I_{TH}, à partir d'un signal temporel de référence TH en forme de rampe décroissante.

Le principe de fonctionnement du dispositif au niveau d'un pixel est illustré sur la partie gauche de la figure 1.

Chaque pixel p_{i,j} comporte un comparateur 18 pour comparer continuellement la valeur de référence I_{TH} à la valeur I_{i,j} qu'il contient.

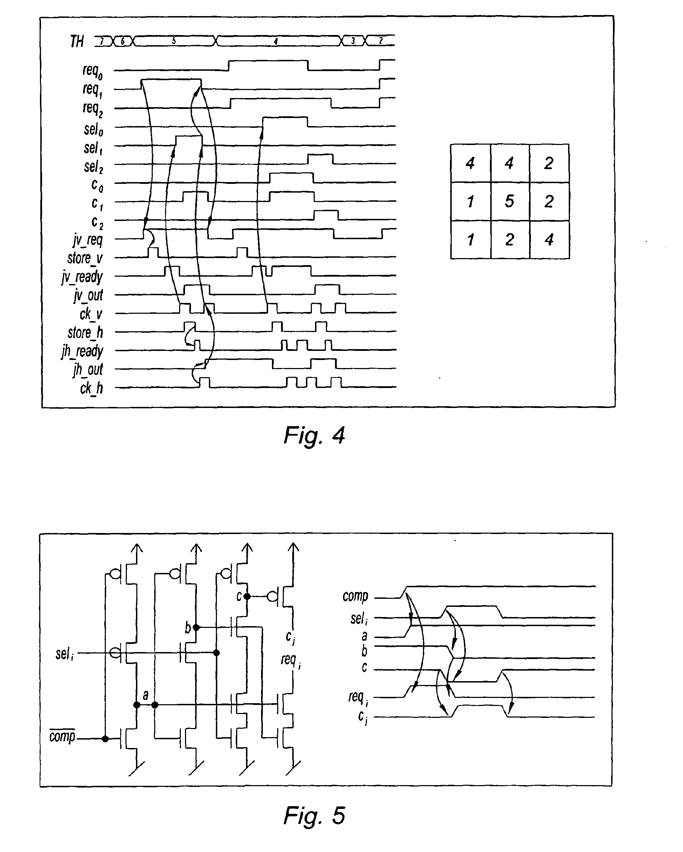

Le résultat comp de cette comparaison est fourni à un circuit électronique de décision 20 dont la structure sera détaillée en référence à la figure 5. Le signal comp prend une valeur non nulle (par exemple normalisée à « 1 ») lorsque les valeurs I_{TH} et l_{i,j} sont égales, et une valeur nulle sinon.

Le circuit électronique de décision 20 reçoit les signaux comp, selᵢ et émet les signaux reqᵢ et cᵢ. Il est conçu pour faire passer le signal reqᵢ à 1 lorsque comp est à 1 (de manière à demander l'accès au bus de communication). En réponse à une requête transmise sous la forme du signal reqᵢ égal à 1, le signal selₗ transmis au circuit électronique de décision 20 puis le signal cⱼ émis par le circuit électronique de décision 20 passent à 1. A cet instant le signal de requête reqᵢ repasse à 0. Finalement, lorsque toutes les valeurs à transmettre des pixels de la ligne i ont été effectivement transmises via le bus de communication, les signaux selᵢ et cⱼ passent à 0.

Grâce aux premier et second circuits d'arbitrage 12 et 14, les lignes i pour lesquelles le signal reqᵢ est à 1 sont sélectionnées successivement, de manière à permettre aux pixels de ces lignes d'accéder successivement au bus de communication. Les deux registres à décalage qu'ils comportent, comme cela sera expliqué ci-dessous, gèrent chacun la mise en circulation d'un unique signal d'autorisation de transmission de valeur lue (appelé aussi ci-après jeton), entre les pixels ayant une valeur à transmettre. Le jeton de ligne circule au niveau du registre à décalage de ligne (vertical) jusqu'à trouver une ligne comportant au moins un pixel ayant une information à transmettre puis le jeton de colonne circule alors au niveau du registre à décalage de colonne (horizontal) de façon à trouver le ou les pixels qui ont une information à transmettre et à transférer ladite information, soit la valeur du pixel.

Le principe général de l'implémentation possible du jeton à transmettre d'un pixel (ou d'un composant électronique) à l'autre à l'aide d'un registre à décalage de bascules D est représenté sur la figure 2.

Comme cela est illustré sur la partie gauche de la figure 2, un signal j_in, indiquant selon sa valeur 1 ou 0 la disponibilité ou l'indisponibilité du jeton pour un pixel donné, est aiguillé soit vers rentrée d'une bascule D 30 correspondante, soit directement vers la sortie j_out de cette bascule D 30, à l'aide de portes logiques ET 32 et d'un inverseur 34, en fonction de la valeur 1 ou 0 d'un signal stop, indiquant si le pixel comporte une valeur à transmettre.

Lorsque le signal j_in vaut 1, le jeton présent à l'entrée de la bascule D 30 est mémorisé dans cette bascule D au flanc montant d'un signal d'horloge ck fourni également à la bascule D. L'entrée de la bascule D peut en outre être utilisée comme signal de sélection du pixel correspondant. Ainsi, un signal sel de sélection est directement relié à l'entrée de la bascule D 30.

Le signal sel et la sortie Q̅ de la bascule D 30 sont fournis en entrée d'une porte logique ET 36 qui fournit en sortie un signal j_stop. Ce signal j_stop passe à la valeur 1 lorsque le jeton est présent en entrée de la bascule D et repasse à la valeur 0 dès que le jeton a été échantillonné, c'est-à-dire mis à jour dans la mémoire de la bascule D 30.

La partie droite de la figure 2 illustre la façon dont un registre à décalage, dans lequel le jeton se propage, peut être réalisé par la mise en cascade de blocs (X₀ à X₃) tel que celui représenté sur la partie gauche de cette même figure 2.

Le bloc X₀ a son entrée j_in connectée à la sortie Q d'une bascule D utilisée pour injecter le jeton dans le registre à décalage.

Pour initialiser le registre à décalage, un signal reset à 1 est transmis à une entrée correspondante de chaque bascule D du registre à décalage, pour que celles-ci soient réinitialisées et qu'un jeton soit placé en entrée de la première bascule D.

Dans l'exemple représenté sur la figure 2, les pixels correspondant respectivement aux blocs X₀, X₁ et X₃ ont une valeur à transmettre (les signaux correspondants stop₀, stop₁ et stop₃ valent 1). Le pixel correspondant au bloc X₂ n'a rien à transmettre (stop₂ est à 0).

Lorsqu'un jeton est placé en entrée du bloc X₀, puisque le signal stop₀ vaut 1, le signal sel₀ passe à 1. Au premier flanc montant du signal d'horloge ck transmis à toutes les bascules D du registre à décalage, le pixel correspondant au bloc X₀ transmet sa valeur via le bus de communication et le signal sel₀ passe à 0 transmettant ainsi le jeton à l'entrée du bloc X₁. Le signal sel₁ passe alors à 1 étant donné que stop₁ vaut 1. Au flanc montant suivant du signal d'horloge ck, le pixel correspondant au bloc X₁ transmet sa valeur via le bus de communication et le signal sel₁ passe à 0 transmettant ainsi le jeton directement à l'entrée du bloc X₃ puisque le signal stop₂ vaut 0. Le signal sel₃ passe alors à 1. D'une façon plus générale, lorsque le signal selₗ est à 1, le bus de communication est alors à disposition du pixel correspondant au bloc Xₗ.

Le temps de propagation du jeton entre deux blocs Xₗ correspondant à deux pixels ayant une valeur à transmettre dépend du nombre de blocs intermédiaires. Il est donc nécessaire de disposer d'un signal j_ready indiquant que le jeton est stoppé à un endroit donné du registre à décalage. Ce signal, j_ready est obtenu en combinant dans une porte logique OU 38 les signaux j_stop de tous les blocs Xᵢ du registre à décalage.

Dans l'exemple de la figure 2, l'entrée de la bascule D 30 est utilisée comme signal de sélection du pixel correspondant.

En variante, comme cela est illustré sur la figure 3, il est possible de raccorder le signal sel de sélection à la sortie Q (au lieu de l'entrée) de la bascule D 30.

En outre, pour l'intégration d'un registre à décalage tel que celui décrit précédemment dans chacun des premier et second circuits d'arbitrage 12 et 14, une bascule D 40 est ajoutée en entrée commune des deux portes logiques ET 32, pour mémoriser à un instant la valeur du signal req reçu par la bascule D 30 avant le passage du jeton. De plus, lorsque le signal sel vaut 1, le pixel correspondant à la bascule D 30 encode son adresse sur une ligne addr spécifique.

On remarquera de plus que le registre à décalage décrit précédemment comporte des bascules D 30 qui sont chacune associées à un composant électronique (en l'occurrence un pixel) du dispositif de lecture d'informations.

Dans le cas particulier où les composants électroniques sont des pixels arrangés en matrice, les bascules D 30 des registres à décalage des premier et second circuits d'arbitrage 12 et 14 ne sont plus associées chacune à un pixel mais à une ligne ou à une colonne de la matrice.

Ceci permet de réduire le nombre de bascules 30 nécessaires à n+m au lieu de nm.

Un exemple de fonctionnement du dispositif décrit précédemment, pour une matrice de 3 x 3 pixels, est représenté sur la figure 4.

Le premier circuit d'arbitrage vertical 12 échange, avec une unité de séquencement (non représentée), les signaux suivants, comme cela est par ailleurs indiqué sur la figure 1 :
- ck_v le signal d'horloge vertical, reçu par le premier circuit d'arbitrage 12 ;
- store_v le signal d'activation de la mémorisation des signaux reqᵢ, reçu par le premier circuit d'arbitrage 12 ;
- jv_ready le signal indiquant que le jeton est stoppé à un endroit donné du registre à décalage du premier circuit d'arbitrage 12, émis par le premier circuit d'arbitrage 12 ;
- jv_req le signal indiquant si au moins l'un des signaux reqᵢ est à 1, émis par le premier circuit d'arbitrage 12 ;
- jv_out le signal de sortie du registre à décalage du premier circuit d'arbitrage 12, émis par le premier circuit d'arbitrage 12 ; et
- addr_v le signal spécifique d'encodage des adresses verticales, émis par le premier circuit d'arbitrage 12.

Le second circuit d'arbitrage horizontal 14 échange, avec l'unité de séquencement (non représentée), les signaux suivants, comme cela est par ailleurs indiqué sur la figure 1 :
- ck_h le signal d'horloge horizontal, reçu par le second circuit d'arbitrage 14 ;
- store_h le signal d'activation de la mémorisation des signaux cⱼ, reçu par le second circuit d'arbitrage 14 ;
- jh_ready le signal indiquant que le jeton est stoppé à un endroit donné du registre à décalage du second circuit d'arbitrage 14, émis par le second circuit d'arbitrage 14 ;
- jh_out le signal de sortie du registre à décalage du second circuit d'arbitrage 14, émis par le second circuit d'arbitrage 14 ; et
- addr_h le signal spécifique d'encodage des adresses horizontales, émis par le second circuit d'arbitrage 14.

Dans l'exemple présent, où les valeurs à lire dans les pixels sont comprises entre 5 et 1, la valeur initiale du signal TH vaut 7. Cette valeur décroît progressivement tant que le signal jv_req est à 0.

Lorsque TH vaut 5, le signal req₁ passe à 1, de sorte que jv_req passe à 1 également, indiquant qu'au moins une des lignes i est activée. La décroissance du signal de référence TH est alors stoppée et le signal store_v passe à 1.

Au flanc montant du signal store_v, les valeurs reqᵢ sont mémorisées dans des bascules D correspondantes et un jeton est placé en entrée du registre à décalage du premier circuit d'arbitrage vertical 12. Lorsque store_v repasse à 0, le jeton se propage jusqu'à la bascule D correspondant à la ligne 1 où il est arrêté puisque req₁ vaut 1. Le signal jv_ready passe à 1 indiquant que le jeton s'est arrêté, ce qui engendre la génération d'une impulsion sur ck_v et store_h.

Au flanc montant de ck_v, le signal sel₁ passe à 1, de sorte que le pixel p_{1,1} active le signal c₁. Simultanément à cette opération, le numéro de la ligne sélectionnée est encodé par addr_v, puis le jeton se propage jusqu'en sortie du registre à décalage du premier circuit d'arbitrage vertical 12 de sorte que jv_out passe à 1.

Au flanc montant de store_h, un jeton est placé en entrée du registre à décalage du second circuit d'arbitrage horizontal 14. Puis au flanc descendant de ce signal store_h, les valeurs cⱼ sont mémorisées dans des bascules D correspondantes et le jeton se propage jusqu'à la bascule D correspondant à la colonne 1, provoquant le passage du signal jh_ready à 1, ce qui engendre une impulsion sur le signal ck_h. Au flanc montant de ck_h, le jeton est échantillonné par la bascule D correspondant à la colonne 1 du registre à décalage du second circuit d'arbitrage horizontal 14, et le numéro de cette colonne est encodé par addr_h.

Simultanément, le jeton se propage jusqu'en sortie du registre à décalage du second circuit d'arbitrage horizontal 14 de sorte que le signal jh_out passe à 1.

Au flanc descendant de ck_h, l'unité de séquencement mémorise les valeurs encodées par les signaux addr_v, addr_h et TH qui encodent l'adresse du pixel p_{1,1} et sa valeur.

Les signaux jv_out et jh_out étant passés à 1, le signal de référence TH est décrémenté d'une unité et prend la valeur 4. Les signaux req₀ et req₂ passent alors à 1, de sorte que jv_req et store_v passent à 1. Un jeton est placé en entrée du registre à décalage du premier circuit d'arbitrage vertical 12, suite au passage de store_v à 1, permettant de sélectionner d'abord la ligne 0 (sel₀) puis la ligne 2 (sel₂). Pour chacune des lignes sélectionnées, l'adresse et la valeur de chacun des pixels ayant 4 comme valeur sont transmises à l'unité de séquencement. Ce procédé se poursuit jusqu'à ce que l'ensemble des valeurs de la matrice de pixels ait été lu.

Le circuit électronique de décision 20 (par exemple pour le pixel p_{i,j}) est réalisé à l'aide d'un circuit de transistors représenté en détail sur la figure 5, dans lequel trois noeuds internes a, b et c sont localisés.

Initialement, les signaux comp et selᵢ fournis au circuit électronique de décision 20 sont à 0, de sorte que le noeud a est à 0 et les noeuds b et c sont à 1.

Lorsque le signal comp passe à l'état haut, le noeud a passe à 1 si le signal selᵢ est à 0, de sorte que reqᵢ passe à 1.

Lorsque le signal selᵢ passe à 1, les noeuds b et c passent à 0, de sorte que reqᵢ repasse à 0 et que cⱼ passe à 1. Lorsque le signal selᵢ passe à 0, le noeud c repasse à 1 de sorte que cⱼ passe à 0. Le noeud b étant alors à 0, tant que le signal comp reste à 1, le noeud c ne peut pas repasser à 0 lors d'une activation ultérieure du noeud selᵢ.

Les circuits électroniques de décision 20 de tous les pixels d'une même ligne de la matrice sont connectés sur la même sortie reqᵢ. De même, les circuits électroniques de décision 20 de tous les pixels d'une même colonne de la matrice sont connectés sur la même sortie cⱼ.

Il apparaît clairement qu'un procédé de lecture d'informations selon l'invention, et que son implémentation dans un dispositif tel que décrit précédemment, permet de résoudre le problème de collisions pour un ensemble de composants électroniques reliés à un bus de communication et devant à certains instants transmettre des valeurs qu'ils contiennent.

Ce dispositif permet de résoudre le problème des collisions, mais assure également, grâce à la circulation d'un jeton, que tous les composants ayant une valeur à transmettre sont sollicités pour la transmission de leur valeur via le bus de communication.

L'invention n'est pas limitée au mode de réalisation décrit précédemment qui présente l'invention pour une application particulière de lecture de valeurs contenues dans une matrice de pixels, puis de transmission des valeurs lues à l'aide d'un procédé d'encodage temporel.

L'invention s'applique plus généralement à tout dispositif comportant des composants électroniques reliés à un bus de communication, dans lequel les composants électroniques sont susceptibles d'avoir des valeurs à transmettre via le bus de communication.

## Revendications

1. Dispositif de lecture d'informations (I_{i,j}) dans un ensemble (I) de composants électroniques (p_{i,j}) reliés à un bus de communication, pour la transmission de ces informations via le bus de communication, comportant des moyens de lecture de valeurs contenues dans au moins une partie des composants électroniques de cet ensemble ayant une valeur à transmettre, et un circuit d'arbitrage (10) pour la transmission successive des valeurs lues via le bus de communication, **caractérisé en ce que** le circuit d'arbitrage (10) comporte au moins une pluralité de blocs de traitement (X₀, X₁, X₂, X₃) affectées respectivement à chacun desdits composants électroniques (p_{i,j}) ou, lorsque ceux-ci sont agencés en une pluralité de groupes de ces composants, à chacun desdits groupes de composants,
et **en ce que** les blocs de traitement (X₀, X₁, X₂, X₃) de chacune desdites pluralités de blocs de traitement sont agencés pour, au cours d'une transmission desdites valeurs, transférer d'un bloc au bloc suivant de cette pluralité un unique signal d'autorisation de transmission de valeur lue, ledit signal d'autorisation étant apte, en passant d'un bloc de traitement au bloc suivant, à détecter lesquels parmi lesdits composants électroniques (p_{i,j}) ou groupes de composants électroniques associés à ladite pluralité de blocs de traitement, ont une information à transmettre et à provoquer, le cas échéant, la transmission successive desdites informations audit bus de communication..

2. Dispositif de lecture d'informations selon la revendication 1, **caractérisé en ce que** chaque pluralité de blocs de traitement (X₀, X₁, X₂, X₃) est agencée selon la configuration d'un registre à décalage.

3. Dispositif de lecture d'informations selon la revendication 2, dans lequel les composants électroniques (p_{i,j}) constituent une matrice (I) dans laquelle chaque ligne et chaque colonne forment l'un desdits groupes de composants électroniques et en ce que le circuit d'arbitrage (10) comporte un registre à décalage vertical (12) comportant un bloc de traitement (Xᵢ) pour chaque ligne de la matrice et un registre à décalage horizontal (14) comportant un bloc de traitement (Xᵢ) pour chaque colonne de la matrice.

4. Procédé de lecture d'informations (I_{i,j}) dans un ensemble (I) de composants électroniques (p_{i,j}) reliés à un bus de communication, pour la transmission de ces informations via le bus de communication, comportant les étapes suivantes :
- lecture de valeurs contenues dans au moins une partie des composants électroniques de cet ensemble ayant une valeur à transmettre, et
- arbitrage pour la transmission successive des valeurs lues via le bus de communication,
**caractérisé en ce que** le circuit d'arbitrage (10) comporte au moins une pluralité de blocs de traitement (X₀, X₁, X₂, X₃) affectées respectivement à chacun desdits composants électroniques (p_{i,j}) ou, lorsque ceux-ci sont agencés en une pluralité de groupes de ces composants, à chacun desdits groupes de composants,
et **en ce qu'**il consiste en outre, au cours d'une transmission desdites valeurs, à transférer d'un bloc au bloc suivant d'au moins l'une desdites pluralités de blocs de traitement un unique signal d'autorisation de transmission de valeur lue, ledit signal d'autorisation étant apte, en passant d'un bloc de traitement au bloc suivant, à détecter successivement dans chacun desdits blocs de traitement au cours du passage dudit signal d'autorisation de transmission de valeur lesquels parmi lesdits composants électroniques (p_{i,j}) ou groupes de composants électroniques associés à ladite pluralité de blocs de traitement, ont une information à transmettre et à provoquer, le cas échéant, la transmission successive desdites informations audit bus de communication.

5. Procédé de lecture d'informations selon la revendication 4, **caractérisé en ce qu'**il consiste en outre :
- à comparer une valeur (I_{i,j}) contenue dans chaque composant électronique (p_{i,j}) à un signal temporel de référence (TH) en forme de rampe décroissante ;
- à engendrer une requête (reqᵢ) de valeur à transmettre pour un composant électronique lorsqu'à un instant donné la valeur du signal temporel de référence est égale à la valeur contenue dans ce composant électronique;
- ledit signal d'autorisation de transmission provoquant ladite transmission pour les composants électroniques pour lesquels une requête de valeur à transmettre est engendrée, et **en ce que**
- la valeur (I_{TH}) du signal temporel (TH) de référence est maintenue constante tant que ledit signal d'autorisation n'est pas passé parmi tous les blocs de traitement associées respectivement auxdits composants électroniques.

6. Application d'un procédé de lecture selon la revendication 4 ou 5, pour la lecture d'informations contenues dans une matrice (I) de pixels (p_{i,j}), chaque pixel constituant un composant électronique de cette matrice.

## Claims

1. Device for the reading of information (I_{i,j}) in an assembly (I) of electronic components (p_{i,j}) connected to a communication bus, for the transmission of this information via the communication bus, comprising means for reading the values contained in at least a part of the electronic components of this assembly having a value to transmit, and an arbitration circuit (10) for the successive transmission of the values read via the communication bus, **characterised in that** the arbitration circuit (10) comprises at least one plurality of processing blocks (X₀, X₁, X₂, X₃) allocated respectively to each of the said electronic components (p_{i,j}) or, when these are arranged in a plurality of groups of these components, to each of the said groups of components,
and **in that** the processing blocks (X₀, X₁, X₂, X₃) of each of the said pluralities of processing blocks are arranged such that, in the course of a transmission of the said values, they transfer from one block to the following block of this plurality a unique authorisation signal for the transmission of the read value, the said authorisation signal being capable, when passing from one processing block to the following block, of detecting those among the said electronic components (p_{I,J}) or groups of electronic components associated with the said plurality of processing blocks which have an item of information to transmit and of causing, where applicable, the successive transmission of the said information to the said communication bus.

2. Device for the reading of information according to Claim 1, **characterised in that** each plurality of processing blocks (X₀, X₁, X₂, X₃) is arranged according to the configuration of a shift register.

3. Device for the reading of information according to Claim 2, in which the electronic components (p_{I,J}) constitute a matrix (I) in which each line and each column forms one of the said groups of electronic components, and in which the arbitration circuit (10) comprises a vertical shift register (12) comprising a processing block (X_{I}) for each line of the matrix and a horizontal shift register (14) comprising a processing block (Xᵢ) for each column of the matrix.

4. Method for the reading of information (I_{i,j}) in an assembly (I) of electronic components (p_{i,j}) connected to a communication bus, for the transmission of this information via the communication bus, comprising the following stages:
- reading of values contained in at least one part of the electronic components of this assembly having a value to transmit, and
- arbitration for the successive transmission of the values read via the communication bus,
**characterised in that** the arbitration circuit (10) comprises at least one plurality of processing blocks (X₀, X₁, X₂, X₃) allocated respectively to each of the said electronic components (p_{i,j}) or, when these are arranged in a plurality of groups of these components, to each of the said groups of components,
and **in that** it further consists, in the course of a transmission of the said values, of transferring from one block to the following block of the at least one of the said pluralities of processing blocks a unique authorisation signal for the transmission of the read value, the said authorisation signal being capable, when passing from one processing block to the following block, of detecting successively in each of the said processing blocks, in the course of the passage of the said signal for the authorisation of the transmission of values, those among the said electronic components (p_{i,j}) or groups of electronic components associated with the said plurality of processing blocks which have an item of information to transmit and of causing, where applicable, the successive transmission of the said information to the said communication bus.

5. Method for the reading of information according to Claim 4, **characterised in that** it further consists of:
- comparing a value (I_{i,j}) contained in each electronic component (p_{I,J}) with a temporal reference signal (TH) in the form of a decreasing ramp;
- generating a request (reqᵢ) for value to be transmitted for an electronic component when, at a given instant, the value of the temporal reference signal is equal to the value contained in this electronic component;
- the said transmission authorisation signal causing the said transmission for the electronic components for which a request for value to be transmitted is generated, and **in that**
- the value (I_{TH}) of the temporal reference signal (TH) is maintained constant, such that the said authorisation signal is not passed among all the processing blocks associated respectively with the said electronic components.

6. Application of a reading process according to Claim 4 or 5, for the reading of items of information contained in a matrix (I) of pixels (p_{i,j}), each pixel constituting an electronic component of this matrix.

## Patentansprüche

1. Datenlesevorrichtung (I_{i,j}) in einer Anordnung (I) von elektronischen Bauteilen (p_{i,j}), welche mit einem Kommunikationsbus verbunden sind, um die Daten über den Kommunikationsbus zu übertragen, mit Einrichtungen zum Lesen von Werten, welche in mindestens einem Teil der elektronischen Bauteile der Anordnung, welche einen zu übertragenden Wert aufweisen, enthalten sind, und mit einer Arbiterschaltung (10) zur sukzessiven Übertragung der gelesenen Werte über den Kommunikationsbus, **dadurch gekennzeichnet, dass** die Arbiterschaltung (10) Einrichtungen aufweist, welche ein einzigartiges Token der Berechtigung zur Übertragung des gelesenen Wertes unter den elektronischen Bauteilen (I_{i,j}), welche einen zu übertragenden Wert aufweisen, in Umlauf bringt.

2. Datenlesevorrichtung nach Anspruch 1, bei welcher die Arbiterschaltung (10) mindestens ein Schieberegister aufweist.

3. Datenlesevorrichtung nach Anspruch 2, bei welcher die elektronischen Bauteile (p_{i,j}) eine Matrix (I) bilden, wobei die Arbiterschaltung (10) ein Vertikal-Schieberegister (12) mit einem Block (Xᵢ) für jede Zeile der Matrix und ein Horizontal-Schieberegister (14) mit einem Block (Xⱼ) für jede Spalte der Matrix aufweist.

4. Verfahren zum Lesen von Daten (I_{i,j}) in einer Anordnung (I) elektronischer Bauteile (p_{i,j}), welche mit einem Kommunikationsbus verbunden sind, um die Daten über den Kommunikationsbus zu übertragen, wobei das Verfahren die folgenden Schritte umfasst:
- Lesen der in mindestens einem Teil der elektronischen Bauteile der Anordnung, welche einen zu übertragenden Wert aufweisen, enthaltenen Werte, und
- Arbitrieren der sukzessiven Übertragung der gelesenen Werte über den Kommunikationsbus,
**dadurch gekennzeichnet, dass** der Schritt des Arbitrierens umfasst, ein einzigartiges Token der Berechtigung zur Übertragung des gelesenen Werts unter den elektronischen Bauteilen, welche einen zu übertragenden Wert aufweisen, in Umlauf zu bringen.

5. Verfahren zum Lesen von Daten nach Anspruch 4, bei welchem:
- ein in jedem der elektronischen Bauteile (p_{i,j}) enthaltener Wert (I_{i,j}) mit einem Referenz-Zeitsignal (TH) in Form einer abnehmenden Rampe verglichen wird;
- eine Anforderung (reqᵢ) des zu übertragenden Wertes für ein elektronisches Bauteil erzeugt wird, sobald zu einem gegebenen Zeitpunkt der Wert des Referenz-Zeitsignals gleich dem in diesem elektronischen Bauteil enthaltenen Wert ist;
- das Berechtigungs-Token unter allen elektronischen Bauteilen umläuft, für welche eine Anforderung eines zu übertragenden Wertes erzeugt wurde, wobei der Wert (i_{TH}) des Referenz-Zeitsignals (TH) konstant gehalten wird, solange das Token nicht unter allen elektronischen Bauteilen umgelaufen ist, welche diesen zu übertragenden Wert aufweisen.

6. Anwendung eines Leseverfahrens nach Anspruch 4 oder 5 zum Lesen von Daten, welche in einer Matrix (I) von Pixeln (p_{i,j}) enthalten sind, wobei jedes Pixel ein elektronisches Bauteil dieser Matrix bildet.
